Europäisches Patentamt

European Patent Office

Office européen des brevets

(19)

(11) Publication number: **0 062 442**
**B1**

(12) **EUROPEAN PATENT SPECIFICATION**

(45) Date of publication of patent specification: **10.07.85**

(21) Application number: **82301489.9**

(22) Date of filing: **23.03.82**

(51) Int. Cl.⁴: **H 04 M 11/06,** H 04 B 3/03,
H 03 H 7/00

(54) **Apparatus for coupling signals to or from a two-wire line.**

(30) Priority: **06.04.81 CA 374737**
**21.12.81 CA 392827**

(43) Date of publication of application:
**13.10.82 Bulletin 82/41**

(45) Publication of the grant of the patent:
**10.07.85 Bulletin 85/28**

(84) Designated Contracting States:
**DE FR GB IT NL SE**

(56) References cited:
**DE-A-2 439 432**
**US-A-3 937 889**

**PROCEEDINGS OF THE IEEE, vol. 65, no. 10,
October 1977, New York, US G. SZENTIRMAI
"FILSYN-A general purpose filter synthesis
program" pages 1443-1458**

(73) Proprietor: **NORTHERN TELECOM LIMITED**
**1600 Dorchester Boulevard West**
**Montreal Quebec H3H 1R1 (CA)**

(72) Inventor: **Carsten, Ralph Thomas**
**32 Elterwater Avenue**
**Nepean Ontario, K2H 5J2 (CA)**
Inventor: **Nakhla, Michael Sobhy**
**1054 Barwell Avenue**
**Ottawa Ontario, K2B 8H5 (CA)**
Inventor: **Bunner, Charles Brian David**
**13 Robertlee Drive**
**Carp Ontario K0A 1L0 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to apparatus for coupling signals to or from a two-wire line. The invention is particularly, but not exclusively, concerned with apparatus for separately coupling both voice-band signals and above voice-band frequency-shift-keyed (FSK) data signals in both directions to and from a balanced two-wire line such as a telephone subscriber line.

It is desirable to provide a low pass filter for coupling voice-band signals to and from arbitrary telephone subscriber lines of widely variable and complex impedance without resorting to buffering or adaptive arrangements. Such a filter is particularly useful for coupling voice-band signals on such lines to telephone equipment, without also coupling to such equipment above voice-band data signals which can be carried on the lines.

The above voice band signals, for example FSK data signals, must also be coupled to and from the two-wire line. To this end, a coupling network is desired which does not adversely affect the designed filter characteristics, couples the data signals to and from the two-wire line in a balanced manner, and avoids the data signals being attenuated by the filter components. In the latter respect in particular the filter may include a shunt capacitor which is coupled across the two-wire line and therefore provides a low impedance across the line for above voice-band data signals.

In United States No. 3,937,889 there is disclosed a data transmission system utilizing the telephone voice communication network for transmitting data between the location of a telephone subscriber's handset and a telephone central office. Data at frequencies above the telephone voice transmission band is capacitively coupled to a subscriber's line at the subscriber's handset, and at the central office the data is capacitively coupled to a data receiver, voice frequency signals being passed by low-pass filters which serve to block the data signals. No details of the form of the low-pass filters are given.

Accordingly, an object of this invention is to provide apparatus which facilitates coupling signals in a predetermined pass band of a filter, and signals having frequencies outside said pass band, to or from a two-wire line.

According to this invention there is provided apparatus for coupling signals to or from a two-wire line, the apparatus comprising a filter having a predetermined pass band for coupling signals in the pass band to or from the two-wire line, characterized by a transformer having at least one first winding and at least one second winding; the filter including a shunt capacitor coupled to the two-wire line via the at least one second winding; and an inductor coupled in series with the at least one first winding and forming with the capacitor, as reflected through the transformer, a series resonant circuit having a predetermined resonance frequency outside the pass band, whereby signals substantially at the predetermined resonance frequency are coupled to or from the two-wire line via the inductor and the transformer.

In a preferred embodiment, the transformer comprises two second windings connected in series with the capacitor, one on each side thereof, across the two-wire line.

In another embodiment, the transformer comprises two second windings each connected in series with a respective wire of the two-wire line, the capacitor being connected between the two second windings on the side thereof remote from the two-wire line.

The apparatus preferably includes a parallel resonant circuit, resonant at substantially the predetermined resonance frequency and having a relatively low impedance in the pass band of the filter, coupled across the at least one first winding of the transformer. The parallel resonant circuit causes the second windings of the transformer to appear as virtual short circuits to signals in the pass band of the filter, so that the filter characteristics in the pass band are not degraded by the presence of the transformer and components coupled to it.

The apparatus may include a second inductor coupled in series with the at least one first winding and forming with the capacitor, as reflected through the transformer, a second series resonant circuit having a second predetermined resonance frequency outside the pass band, whereby signals substantially at the second predetermined resonance frequency are coupled to or from the two-wire line via the second inductor and the transformer.

Alternatively, or in addition, the apparatus may include a capacitor coupled in parallel with the inductor to form a parallel resonant circuit having a second predetermined resonance frequency outside the pass band, whereby signals substantially at the second predetermined resonance frequency are not coupled via the inductor.

In particular, the filter may be a low pass filter and the two-wire line may comprise a telephone subscriber line.

Preferably the filter has an input port of input impedance $Z_{in}$ for termination with a source impedance $Z_1$, and has an output port of output impedance $Z_{out}$ for termination with a load impedance $Z_2$, and comprises reactive components, including the shunt capacitor, which define the predetermined pass band, the impedances of the reactive components being selected to substantially minimize the quantities $|Z_{in}-Z_2|$ and $|Z_{out}-Z_1|$, particularly the sum $|Z_{in}-Z_2|+|Z_{out}-Z_1|$, in said pass band.

Thus the apparatus can conveniently be used for coupling, for example, FSK data signals (or other narrow band carrier type signals) to and from a telephone line, such signals being carried on the line simultaneously with voice-band signals.

The invention will be further understood from the following description with reference to the accompanying drawings, in which:

Fig. 1 illustrates in a block diagram a telephone subscriber line including at each end of the line a low pass filter for separating voice frequency signals from higher frequency data signals on the line;

Fig. 2 illustrates a balanced form of each low pass filter;

Fig. 3 shows an apparatus illustrating the principles of embodiments of the invention;

Fig. 4 illustrates an alternative transformer coupling arrangement to that shown in Fig. 3, the alternative arrangement being suitable for coupling signals to and from an unbalanced two-wire line;

Fig. 5 illustrates another alternative transformer coupling arrangement, for coupling signals to and from a balanced two-wire line; and

Fig. 6 illustrates in detail apparatus for coupling full duplex FSK data signals at the ends of a balanced telephone subscriber line, in accordance with an embodiment of the invention.

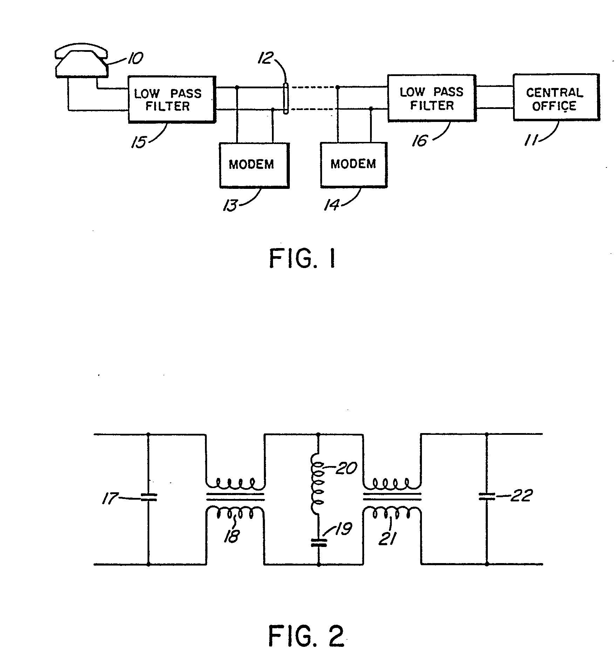

Referring to Fig. 1, a subscriber's telephone 10 is coupled to a telephone central office 11 via a conventional two-wire subscriber line 12. Modems 13 and 14 are also connected, via coupling networks which are not shown in Fig. 1, to the subscriber line 12 for transmitting data via the subscriber line between the locations of the telephone 10 and the central office 11 at above voice-band frequencies. In order to prevent the data from passing to the telephone 10 and to the central office 11, these are coupled to the subscriber line 12 via low pass filters 15 and 16.

Each low pass filter 15 or 16 is required to have a characteristic including a pass band up to a frequency fp in which the filter has a maximum attenuation ripple, or variation, Ap, and a stop band from a frequency fs in which the filter has a minimum attenuation As. Typically, fs=21 kHz, As=60 dB, fp=3200 Hz, and Ap=±0.1 dB relative to the attenuation at 1000 Hz. Each filter, for example the low pass filter 15, can be considered to be driven by a voltage source in series with an impedance Z1 connected to an input port of the filter, and to be loaded by an impedance Z2 connected to an output port of the filter. The voltage source and impedance Z1 correspond to the telephone 10, while the impedance Z2 corresponds to the subscriber line 12, both typically having nominal impedances of 600 ohms.

In order to determine a suitable form for each of the low pass filters, in the prior art the desired characteristic values fs, As, fp, and Ap have been used to design a filter to be terminated by resistive impedances Z1 and Z2. This design is particularly conveniently carried out using the computer design program FILSYN (see "FILSYN—A General Purpose Filter Synthesis Program", by G. Szentirmai, Proc. IEEE, Vol. 65, No. 10, October 1977, pages 1443 to 1458). This program is used in known manner, initially being supplied with the desired characteristic values and resistive termination impedances Z1 and Z2 to determine a transfer function of the filter, and from this and the desired configuration of the filter to derive the form of a filter which satisfies the characteristic values and which is matched to the resistive termination impedances Z1 and Z2.

Such a filter can not be used with arbitrary subscriber lines 12 whose impedances are not purely resistive or accurately known, if the design characteristics of the filter are to be satisfied without individual adjustment and/or buffering of the filter.

Accordingly, each of the low pass filters 15 and 16 is preferable designed in accordance with the desired characteristics already discussed, but with the additional constraint that the quantities $|Zin—Z2|$ and $|Zout—Z1|$ be substantially minimized in the pass band of the filter. As already explained, Z1 and Z2 are the nominal input and output, respectively, termination impedances of the filter (which may in this case be complex impedances rather than purely resistive impedances), Zin is the input impedance of the filter at its input port, and Zout is the output impedance of the filter at its output port. In order to substantially minimize the quantities $|Zin—Z2|$ and $|Zout—Z1|$, conveniently their sum $|Zin—Z2|+|Zout—Z1|$ is minimized.

Thus in order to design a suitable form for each of the low pass filters 15, 16, the desired characteristic values fs, As, fp, and Ap and the nominal termination impedances Z1 and Z2 are used in the computer design program FILSYN to determine the transfer function of the filter, and from this and the desired configuration of the filter to determine a form of filter as already described. Typically the result is a 3rd order filter as already described. This determined form of filter is then optimized, preferably using the computer aided design program SCAMPER (see Telesis, Volume 7, Number 3, 1980, pages 2 to 9, published by Bell-Northern Research Ltd.), to provide the best possible filter response. In the optimization process, component values of the filter are modified and updated if the modifications improve the filter response. The program SCAMPER is used with the additional constraint imposed in this program that the sum $|Zin—Z2|+|Zout—Z1|$ be minimized in the filter pass band. The SCAMPER program indicates that this can not be achieved with the number of variables provided by the determined form of the 3rd order filter. Accordingly, the FILSYN program is used again with the desired characteristic values and the nominal termination impedances with the additional requirement that the filter be a higher order filter, e.g. a 5th order filter. As an alternative, a more restrictive pass band ripple Ap could be imposed upon the filter design using the FILSYN program with a similar result. The resulting determined form of 5th order filter is then optimized using the SCAMPER program, again with the additional constraint imposed that the sum $|Zin—Z2|+|Zout—Z1|$ be minimized in the pass band.

The resulting 5th order filter is typically as shown in Fig. 2, comprising a shunt capacitor 17, a series inductor 18 which is divided equally between the two wires of the filter and is contituted by two coupled coils to provide small size and good longitudinal balance, a shunt capacitor 19 in series with an inductor 20, a series inductor 21 similar to the inductor 18, and a shunt capacitor 22. For the filter to have a characteristic including a pass band up to a frequency of 3200 Hz in which the filter has a maximum attenuation ripple of ±0.1 dB relative to the attenuation at 1000 Hz, and a stop band above a frequency of 21 kHz in which the filter has a minimum attenuation of 60 dB, the components 17 to 22 have values of 30.88 nF, 24.96 mH, 80.54 nF, 0.399 mH, 24.96 mH, and 30.88 nF respectively. Each series inductor 18 and 21 is conveniently formed by two bifilar wound coils coupled as indicated in Fig. 2, the inductance of each individual coil, measured with the coil to which it is coupled open-circuit, being 6.24 mH.

As shown in Fig. 2 the shunt capacitor, for example 22, at the line 12 side of the low pass filter provides a low impedance across the line 12 for above voice-band signals. Consequently a problem arises in transmitting such signals between the modems 13 and 14 via the line 12 without excessive attenuation or loss of the signals due to the shunt capacitors of the filters. Furthermore, it is necessary to couple the modems 13 and 14 to the line 12 in such a manner that the design characteristics of the filters 15 and 16 are still complied with. This presents a significant problem in particular in maintaining the desired small attenuation ripple in the filter pass band.

Furthermore, it is desirable to provide for full duplex transmission of signals between the modems 13 and 14, simultaneously with the transmission of voice signals on the line 12. For example, the signals transmitted from the modem 13 to the modem 14 may be FSK data signals at a center frequency of 36 kHz and having actual frequencies of 35.5 and 36.5 kHz, and the signals transmitted from the modem 14 to the modem 13 may be FSK data signals at a center frequency of 22 kHz and having actual frequencies of 21.5 and 22.5 kHz. These signal frequencies are assumed to be used in the following description, but other frequencies and types of signal transmission may be used.

In addition, the line 12 is generally a balanced line, and it is therefore generally desired to couple the data signals between the line and the modems in a balanced manner.

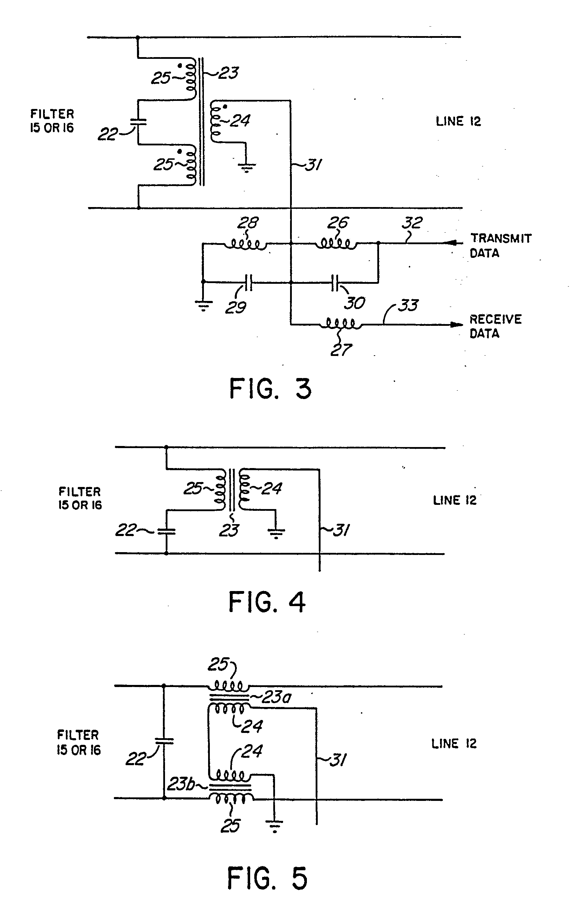

Fig. 3 shows apparatus which illustrates how in accordance with embodiments of the invention the various desiderata above can be met. Fig. 3 shows only the shunt capacitor 22 of the filter 15 or 16 at the line 12 side of the respective filter, the remainder of the filter being as illustrated in Fig. 2. In addition, Fig. 3 shows a data coupling network comprising a transformer 23 having a first winding 24 and two second windings 25 phased as shown by dots, inductors 26, 27, and 28, and capacitor 29 and 30. The second windings 25 of the transformer 23 are coupled in series with the filter capacitor 22, one on each side thereof, across the line 12, to provide a balanced coupling of data signals to and from the line 12. The first winding 24 of the transformer is connected between a wire 31 and circuit ground. With the wire 31 connected as described below, the transformer has a relatively small inductive reactance in the voice-band compared with the capacitive reactance of the capacitor 22, but the actual magnitude of this reactance is not critical because the low pass filter is designed to be insensitive to its terminations. The inductance of the transformer 23, measured across the first winding 24 with the capacitor 22 shorted and the second windings 25 open circuit, is relatively large (for example 8 to 10 times the inductance of the inductor 26) to avoid affecting the resonance described below of the inductor 26 with the capacitor 22.

Transmit data at the respective transmit frequency and present on a wire 32 is coupled to the wire 31 via the inductor 26. The inductance of the inductor 26 is selected so that it is series resonant with the filter capacitor 22, as reflected through the transformer 23, at the transmit frequency. Thus the effect on the transmit data of the shunt capacitor 22 of the low pass filter is compensated by the inductor 26. Similarly the inductance of the inductor 27, which couples receive data from the wire 31 to a wire 33, is selected so that this inductor 27 is series resonant with the filter capacitor 22, as reflected through the transformer 23, at the respective receive frequency. Thus the effect on the receive data of the shunt capacitor 22 is compensated by the inductor 27. The series inductors 26 and 27 therefore facilitate efficient coupling of transmit and receive data between the wires 32 and 33 and the line 12.

In order to inhibit any component at the receive frequency in the transmit data from reaching the line 31, the capacitor 30 is connected in parallel with the inductor 26 to form therewith a parallel resonant circuit which is resonant at the receive frequency.

The inductor 28 and the capacitor 29 are also connected in parallel to form a parallel resonant circuit which is connected between the wire 31 and circuit ground. The values of the components 28 and 29 are selected so that this circuit is resonant at the respective transmit frequency, so that this resonant circuit presents an open circuit to, and does not attenuate, the transmit data on the line 31. At voice frequencies this resonant circuit has a low impedance so that it is a virtual short circuit across the first winding 24 of the transformer 23. Consequently in the filter pass band the second windings 25 of the transformer are virtual short circuits, so that the capacitor 22 is effectively connected directly across the line 12 as in Fig. 2 and the pass band characteristics of the low pass filter are not degraded. In addition, the parallel resonant circuit reduces the effects of impulse noise for example due to dial pulsing, on circuits connected to the wires 32 and 33, because of its virtual short circuit at voice frequencies where most of the energy of such noise is concentrated.

The parallel resonant circuit comprising the components 28 and 29 provides some attenuation of receive data at the receive frequency, but this is readily compensated for by amplification of the receive data signals. This attenuation can be avoided by providing in place of the components 28 and 29 a more complicated circuit which is parallel resonant at both the receive and transmit frequencies, and has a low impedance in the voice-band.

Fig. 4 illustrates an alternative arrangement to that of Fig. 3, showing only the filter capacitor 22 and the transformer 23 and their connections, which can be used to couple data signals to and from an unbalanced line 12. The remainder of the coupling network in this case can be as illustrated in Fig. 3. In Fig. 4, the transformer 23 simply has, in addition to the first winding 24 connected between the wire 31 and circuit ground, a single second winding 25 connected in series with the capacitor 22 across the line 12. This arrangement could also be used, if desired, for coupling data signals to and from a balanced line 12, but the arrangement of Fig. 3 is preferred.

Fig. 5 illustrates another alternative arrangement to that of Fig. 3, again showing only the filter capacitor 22 and the transformer 23 and their connections, which can be used to couple data signals to and from a balanced line 12. Again, the remainder of the coupling network can be as illustrated in Fig. 3. In Fig. 5, the transformer 23 is divided into two parts 23a and 23b, each of which has a first winding 24 and a second winding 25. The first windings 24 are connected in series between the wire 31 and circuit ground. The second windings 25 are connected each in series with a respective wire of the line 12, whereby the filter capacitor 22 is again connected across the line 12 via these windings 25. With appropriately phased second windings connected as shown in Fig. 5, the two parts 23a and 23b of the transformer 23 could be combined into a single transformer 23 having a single first winding as shown in Fig. 3.

The transformer arrangement shown in Fig. 3 is preferred over that of Fig. 5, because the latter arrangement contributes additional d.c. resistance to the subscriber loop including the line 12. However, the arrangement of Fig. 5 can be used if the additional d.c. resistance in the subscriber loop provided by the second windings 25 is acceptable.

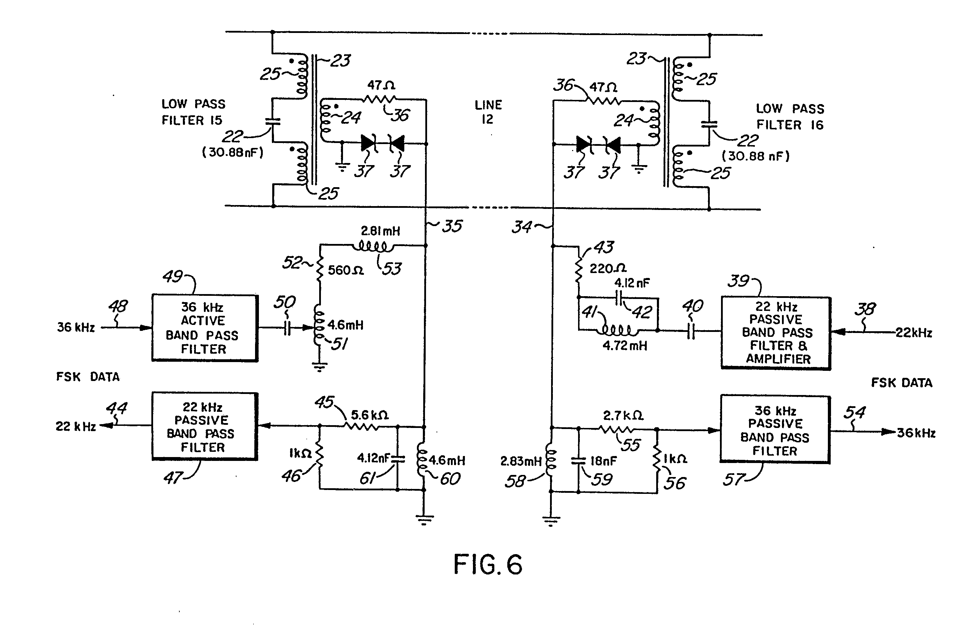

Fig. 6 shows in detail apparatus for coupling FSK data signals at the frequencies mentioned above, to and from a balanced line 12 for full duplex transmission thereon between the low pass filters 15 and 16. Component values shown in Fig. 6 are for these frequencies.

Wires 34 at the central office end and 35 at the subscriber end of the line 12, each corresponding to the wire 31 in Fig. 3 are coupled to the line 12 via respective identical transformers 23 which are connected in the manner described with reference to Fig. 3. The first winding 24 of each transformer 23 has 164 turns, and the second windings 25 of each transformer 23 together have a total of 78 turns, providing a turns ratio from the first winding to the second windings of 2.1:1. Each of the wires 34 and 35 is connected to the respective winding 24 via a respective resistor 36 and is also connected to circuit ground via respective series-connected oppositely-poled zener diodes 37 to provide secondary protection, against transients due to lightning and other causes, for the circuitry coupled to the wires 34 and 35. Primary protection is provided separately in known manner, for example by surge protectors connected directly across the line 12.

Transmit FSK data signals at the center frequency of 22 kHz are coupled from a wire 38 to the wire 34, and thence to the line 12 at the central office end thereof, via a 22 kHz passive band pass filter and amplifier 39, a coupling capacitor 40, a parallel resonant circuit comprising an inductor 41 and a capacitor 42 resonant at the receive frequency of 36 kHz, and a series resistor 43 which reduces impulse noise effects on the output of the filter and amplifier 39. The inductor 41 is series resonant with the capacitor 22 of the filter 16, as reflected through the transformer 23, at the transmit frequency of 22 kHz. At the subscriber end of the line 12 these data signals are coupled from the line 12 to the wire 35, and thence to a wire 44 via a series resistor 45, a shunt resistor 46, and a 22 kHz passive band pass filter 47. The resistors 45 and 46 serve to properly terminate the filter 47 and avoid unduly loading the wire 34.

In the opposite transmission direction, transmit FSK data signals at the center frequency of 36 kHz are coupled from a wire 48 to the wire 35, and thence to the line 12 at the subscriber end thereof, via a 36 kHz active band pass filter 49, a coupling capacitor 50, a step-up transformer 51, a series resistor 52, and a series inductor 53. The inductor 53 is series resonant with the capacitor 22 of the filter 15, as reflected through the transformer 23, at the transmit frequency of 36 kHz. The series resistor 52 reduces the effects of impulse noise on the active filter 49, which provides suppression of 22 kHz components in the transmit data so that in this case no capacitor is provided in parallel with the inductor 53 to resonate at this frequency. At the central office end of the line 12, the 36 kHz data signals are coupled from the line 12 to the wire 34, and thence to a wire 54, via a series resistor 55, a shunt resistor 56, and a 36 kHz passive band pass filter 57. The resistors 55 and 56 serve to properly terminate the filter 57 and avoid unduly loading the line 12.

The wire 34 is also coupled to circuit ground via a parallel resonant circuit, comprising an inductor 58 and a capacitor 59, resonant at the transmit frequency of 22 kHz. Similarly the wire 35 is coupled to circuit ground via a parallel resonant circuit, comprising an inductor 60 and a capacitor 61, resonant at the subscriber end transmit frequency of 36 kHz. These resonant circuits provide the same functions as the circuit comprising the components 28 and 29 in Fig. 3. The attenuation of receive data signals by these circuits, and by the voltage dividers formed by resistors 45, 46 and 55, 56, can be compensated for by amplification of the signals on the wires 44 and 54.

The apparatus of Fig. 6 does not include series inductors in the receive data paths, corresponding to the inductor 27 in Fig. 3. Such inductors may be provided, in series with the resistors 45 and 55 respectively and resonant with the respective capacitor 22 at the respective receive frequency, in order to improve the coupling of data from the line 12 to the filters 47 and 57. However, it has been found that such improved coupling of the receive data is not essential and accordingly that the cost of the series inductors in the receive data paths can be avoided. In this case the filters 47 and 57 must compensate for any reduced selectivity incurred by omitting these series inductors. The inductors 41 and 53 in the transmit data paths could be dispensed with instead, and the series inductors in the receive data paths provided, to achieve efficient coupling of only the receive data signals, but this is much less desirable in view of the greater dynamic range and power levels of the transmit data signals which would then be required, the relative ease with which the receive data signals can be amplified, and the use of the inductor 41 to form a parallel resonant circuit with the capacitor 42.

Although the invention has been described in its application to the coupling of signals to and from a telephone subscriber line and in conjunction with a low pass filter, the invention is not limited thereto and may be applied in conjunction with other types of transmission line and other filters including a terminal shunt capacitor. For example, the arrangements described above may obviously be simplified by providing only one of the series inductors 26 and 27 in Fig. 3, and not the other series inductor and not the capacitor 30, for one-way or semi-duplex transmission of signals at the relevant frequency via the line 12.

In addition, although the invention has been described above in relation to the coupling of FSK data signals at precisely defined frequencies to and from the line 12, the invention is not limited thereto. The series resonant circuits described may be provided with relatively low Q factors to facilitate coupling of data signals within a relatively wide band of frequencies. Furthermore, a plurality of separate series inductors 26 or 27, each series resonant with the filter capacitor 22 at a respective frequency outside the filter pass band, may be provided to facilitate coupling of data signals within an even wider band of frequencies.

Numerous other modifications, variations, and adaptations may be made to the particular embodiments of the invention described above without departing from the scope of the invention as defined in the claims.

## Claims

1. Apparatus for coupling signals to or from a two-wire line (12), the apparatus comprising a filter (15 or 16) having a predetermined pass band for coupling signals in the pass band to or from the two-wire line (12), characterised by:

a transformer (23) having at least one first winding (24) and at least one second winding (25);

the filter (15 or 16) including a shunt capacitor (22) coupled to the two-wire line (12) via the at least one second winding (25); and

an inductor (26 or 27) coupled in series with the at least one first winding (24) and forming with the capacitor (22), as reflected through the transformer (23), a series resonant circuit having a predetermined resonance frequency outside the pass band, whereby signals substantially at the predetermined resonance frequency are coupled to or from the two-wire line (12) via the inductor (26 or 27) and the transformer (23).

2. Apparatus as claimed in claim 1, characterized in that the transformer (23) comprises two second windings (25) connected in series with the capacitor (22), one on each side thereof, across the two-wire line (12).

3. Apparatus as claimed in claim 1, characterized in that the transformer (23) comprises two second windings (25) each connected in series with a respective wire of the two-wire line (12), the capacitor (22) being connected between the two second windings (25) on the side thereof remote from the two-wire line (12).

4. Apparatus as claimed in claim 1, 2, or 3, characterized by including a parallel resonant circuit (28, 29), resonant at substantially the predetermined resonance frequency and having a relatively low impedance in the pass band of the filter, coupled across the at least one first winding (24) of the transformer (23).

5. Apparatus as claimed in any of the preceding claims, characterized by including a capacitor (30) coupled in parallel with the inductor (26) to form a parallel resonant circuit having a second predetermined resonance frequency outside the pass band, whereby signals substantially at the second predetermined resonance frequency are not coupled via the inductor (26).

6. Apparatus as claimed in any of the preceding claims, characterized by including a second inductor (27) coupled in series with the at least one first winding (24) and forming with the capacitor (22), as reflected through the transformer (23), a second series resonant circuit having a second predetermined resonance frequency outside the pass band, whereby signals substantially at the second predetermined resonance frequency are coupled to or from the two-wire line (12) via the second inductor (27) and the transformer (23).

7. Apparatus as claimed in any of the preceding claims, characterized in that the filter (15 or 16) is a low-pass filter and the two-wire line (12) comprises a telephone subscriber line.

8. Apparatus as claimed in any of the preceding claims, wherein the filter comprises reactive components, including the shunt capacitor, which define the predetermined pass band, the filter having an input port of input impedance Zin for termination with a source impedance Z1, and having an output port of output impedance Zout for termination with a load impedance Z2, characterized in that the impedances of said reactive components (17 to 22) are selected to substantially minimize the quantities |Zin—Z2| and |Zout—Z1| in said pass band.

9. Apparatus as claimed in claim 8 characterized in that the impedances of said reactive components (17 to 22) are selected to minimize the sum |Zin—Z2|+|Zout—Z1| in said pass band.

**Patentansprüche**

1. Vorrichtung zum Ein- oder Auskoppeln von Signalen für eine Zweidrahtleitung (12), wobei die Vorrichtung ein Filter (15 oder 16) mit einem vorbestimmten Durchlaßbereich umfaßt, um Signale im Durchlaßbereich in die Zweidrahtleitung (12) ein- oder aus der Zweidrahtleitung (12) auszukoppeln, gekennzeichnet durch:

einen Übertrager (23) mit wenigstens einer ersten und wenigstens einer zweiten Wicklung (24 bzw. 25),

das Filter (15 oder 16), das eine über die zumindest eine zweite Wicklung (25) mit der Zweidrahtleitung (12) verbundene Parallelkapazität (22) einschließt, und

eine mit der wenigstens einen ersten Wicklung (24) in Reihe verbundenen Induktivität, die mit der Kapazität (22), so wie sie durch den Übertrager (23) gespiegelt ist, einen Reihenschwingkreis mit einer vorbestimmten Resonanzfrequenz außerhalb des Durchlaßbereiches bildet, wobei Signale im wesentlichen bei der vorbestimmten Resonanzfrequenz über die Induktivität (26 oder 27) und den Übertrager (23) in die Zweidrahtleitung (12) ein- oder aus der Zweidrahtleitung (12) ausgekoppelt werden.

2. Vorrichtung nach Anspruch 1, dadurch gekennzeichnet, daß der Übertrager (23) zwei zweite Wicklungen (25) umfaßt, die in Reihe mit der Kapazität (22) und beiderseits dieser Kapazität zwischen die Zweidrahtleitung (12) geschaltet sind.

3. Vorrichtung nach Anspruch 1, dadurch gekennzeichnet, daß der Übertrager (23) zwei zweite Wicklungen (25) umfaßt, die jede in Reihe mit einem entsprechenden Draht der Zweidrahtleitung (12) geschaltet sind, wobei die Kapazität (22) zwischen die zwei zweiten Wicklungen (25) auf deren von der Zweidrahtleitung (12) entfernten Seite geschaltet ist.

4. Vorrichtung nach Anspruch 1, 2 oder 3, gekennzeichnet durch einen eine Resonanzfrequenz bei im wesentlichen der vorbestimmten Resonanzfrequenz aufweisenden Parallelschwingkreis (28, 29) mit einer relativ niedrigen Impedanz im Durchlaßbereich des Filters, der quer über die zumindest eine erste Wicklung (24) des Übertragers (23) geschaltet ist.

5. Vorrichtung nach einem der vorhergehenden Ansprüche, gekennzeichnet durch eine Kapazität (30), die parallel mit der Induktivität geschaltet ist, um einen Parallelschwingkreis mit einer zweiten vorbestimmten Resonanzfrequenz außerhalb des Durchlaßbereichs zu bilden, wodurch Signale im wesentlichen bei der zweiten vorbestimmten Resonanzfrequenz nicht über die Induktivität (26) gekoppelt werden.

6. Vorrichtung nach einem der vorhergehenden Ansprüche, gekennzeichnet durch eine zweite Induktivität (27), die mit der zumindest einen ersten Wicklung (24) in Reihe geschaltet ist und mit der Kapazität (22), wie sie sich durch den Übertrager (23) darbietet, einen zweiten Reihenschwingkreis mit einer zweiten vorbestimmten Resonanzfrequenz außerhalb des Durchlaßbereiches bildet, wodurch Signale im wesentlichen bei der zweiten vorbestimmten Resonanzfrequenz über die zweite Induktivität (27) und den Übertrager (23) in die Zweidrahtleitung (12) ein- oder aus der Zweidrahtleitung (12) ausgekoppelt werden.

7. Vorrichtung nach einem der vorhergehenden Ansprüche, dadurch gekennzeichnet, daß das Filter (15 oder 16) ein Tiefpaßfilter ist und daß die Zweidrahtleitung (12) eine Telefonteilnehmerleitung umfaßt.

8. Vorrichtung nach einem der vorhergehenden Ansprüche, wobei das Filter Blindkomponenten einschließlich der Parallelkapazität umfaßt, die den vorbestimmten Durchlaßbereich festlegen, wobei das Filter einen Eingang mit einer Eingangsimpedanz Zin zum Abschluß mit einer Quellenimpedanz Z1 und einen Ausgang mit einer Ausgangsimpedanz Zout zum Abschluß mit einer Lastimpedanz Z2 aufweist, dadurch gekennzeichnet, daß die Impedanzen der Blinkkomponenten (17 bis 22) ausgewählt sind, um die Größen |Zin—Z2| und |Zout—Z1| im Durchlaßband im wesentlichen zu minimieren.

9. Vorrichtung nach Anspruch 8, dadurch gekennzeichnet, daß die Impedanzen der Blindkomponenten (17 bis 22) gewählt sind, um die Summe |Zin—Z2|+|Zout—Z1| im Durchlaßbereich zu minimieren.

**Revendications**

1. Appareil pour le couplage de signaux vers ou en provenance d'une ligne bifilaire (12), l'appareil comprenant un filtre (15 ou 16) ayant une bande passante prédéterminée pour le couplage de signaux dans la bande passante vers ou en provenance de la ligne bifilaire (12), caractérisé:

en ce qu'il comporte un transformateur (23) ayant au moins un premier enroulement (24) et au moins un second enroulement (25);

en ce que le filtre (15 ou 16) contient un condensateur de dérivation (22) connecté à la ligne bifilaire (12) par l'intermédiaire d'au moins ledit second enroulement (25); et

en ce qu'il comporte une bobine d'induction (16 ou 27) connectée en série à au moins ledit premier enroulement (24) et formant avec la condensateur (22), par réflexion sur le transformateur (23), un circuit à résonance série ayant une fréquence de résonance prédéterminée en dehors de la banse passante, de sorte que les signaux se trouvant pratiquement à la fréquence de résonance prédéterminée sont transmis vers ou en provenance de la ligne bifilaire (12) par l'intermédiaire de la bobine d'induction (26 ou 27) et du transformateur (23).

2. Appareil selon la revendication 1, caractérisé en ce que le transformateur (23) comprend deux seconds enroulements (25) connectés en série au condensateur (22), de part et d'autre de celui-ci, entre les deux fils de la ligne bifilaire (12).

3. Appareil selon la revendication 1, caractérisé en ce que le transformateur (23) comprend deux seconds enroulements (25) chacun connectés en série à un fil respectif de la ligne bifilaire (12), le condensateur (22) étant connecté entre les deux seconds enroulements (25) du côté du condensateur éloigné de la ligne bifilaire (12).

4. Appareil selon la revendication 1, 2 ou 3, caractérisé en ce qu'il comporte un circuit à résonance parallèle (28, 29), résonant pratiquement à la fréquence de résonance prédéterminée et ayant une impédance relativement faible dans la bande passante du filtre, raccordé sur au moins ledit premier enroulement (24) du transformateur (23).

5. Appareil selon l'une quelconque des revendications précédentes, caractérisé en ce qu'il comporte un condensateur (30) raccordé en parallèle à la bobine inductrice (26) pour former un circuit à résonance parallèle ayant une second fréquence de résonance prédéterminée en dehors de la bande passante, de sorte que les signaux se trouvant pratiquement à la seconde fréquence de résonance prédéterminée ne sont pas transmis par la bobine inductrice (26).

6. Appareil selon l'une quelconque des revendications précédentes, caractérisé en ce qu'il comporte une seconde bobine inductrice (27) raccordée en série à au moins ledit premier enroulement (24) et formant avec le condensateur (22), par réflexion sur le transformateur (23), un second circuit à résonance en série ayant une seconde fréquence de résonance prédéterminée en dehors de la bande passante, de sorte que les signaux se trouvant pratiquement à la second fréquence de résonance prédéterminée sont transmis vers ou en provenance de la ligne bifilaire (12) par l'intermédiaire de la seconde bobine inductrice (27) et du transformateur (23).

7. Appareil selon l'une quelconque des revendications précédentes, caractérisé en ce que le filtre (15 ou 16) est un filtre passe-bas et en ce que la ligne bifilaire (12) est constituée par une ligne téléphonique d'abonné.

8. Appareil selon l'une quelconque des revendications précédentes, dans lequel le filtre comprend des composante réactifs, parmi lesquels le condensateur de dérivation, qui définissent la bande passante prédéterminée, le filtre ayant une borne d'entrée d'impédance d'entrée $Z_e$ pour se terminer par une impédance source $Z_1$, et ayant une borne de sortie d'impédance de sortie $Z_s$ pour se terminer par une impédance de charge $Z_2$, caractérisé en ce que les impédances de ces composants réactifs (17 à 22) sont sélectonnées de façon à rendre pratiquement minimales les quantitiés $|Z_e - Z_2|$ et $|Z_s - Z_1|$ dans ladite bande passante.

9. Appareil selon la revendication 8, caractérisé en ce que les impédances desdits composants réactifs (17 à 22) sont sélectionnés de façon à rendre minimales la somme $|Z_e - Z_2| + |Z_s - Z_1|$ dans ladite bande passante.

FIG. 1

FIG. 2

FIG. 3

FIG. 4

FIG. 5

FIG.6

LOW PASS FILTER 16

22 (30.88 nF)

25 23 25

36 47Ω 24 37 37

34

LINE 12

35

43 220Ω 42 4.12nF 41 4.72mH 40

39 22 kHz PASSIVE BAND PASS FILTER & AMPLIFIER 38 22kHz

54 36kHz FSK DATA

57 36 kHz PASSIVE BAND PASS FILTER

2.7kΩ 55 1kΩ 56

18nF 59

2.83mH 58

4.6mH 60

5.6kΩ 45 4.12nF 61 1kΩ 46

52 560Ω 2.81mH 53

50 4.6mH 51

49 36 kHz ACTIVE BAND PASS FILTER 48 36 kHz

47 22 kHz PASSIVE BAND PASS FILTER 44 FSK DATA 22 kHz

LOW PASS FILTER 15

22 (30.88nF)

25 23 36 47Ω 24 37 37 25